(19) Europäisches Patentamt
European Patent Office
Office européen des brevets

(11) EP 3 882 318 A1

(12) **EUROPEAN PATENT APPLICATION**
published in accordance with Art. 153(4) EPC

(43) Date of publication:
**22.09.2021 Bulletin 2021/38**

(21) Application number: **19884664.4**

(22) Date of filing: **08.11.2019**

(51) Int Cl.:
***C09D 7/63*** *(2018.01)* ***C09D 7/40*** *(2018.01)*
***C09D 175/04*** *(2006.01)* ***C09D 167/00*** *(2006.01)*
***C09D 163/00*** *(2006.01)* ***C09D 7/61*** *(2018.01)*
***B05D 7/14*** *(2006.01)* ***B05D 7/24*** *(2006.01)*

(86) International application number:
**PCT/KR2019/015177**

(87) International publication number:
**WO 2020/101284 (22.05.2020 Gazette 2020/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.11.2018 KR 20180137954**

(71) Applicant: **POSCO**
**Gyeongsangbuk-do 37859 (KR)**

(72) Inventors:
- **JO, Du-Hwan**
**Pohang-si, Gyeongsangbuk-do 37877 (KR)**
- **KANG, Choon-Ho**
**Pohang-si, Gyeongsangbuk-do 37877 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

(54) **ORGANIC-INORGANIC COMPOSITE COATING COMPOSITION, AND ZINC-PLATED STEEL SHEET SURFACE-TREATED USING SAME**

(57) The present invention provides an organic-inorganic composite resin composition for coating the surface of a zinc-plated steel sheet, comprising 5-25 wt% of a polymer resin, 4-20 wt% of a silane compound, 3-10 wt% of a curing agent and 0.1-2 wt% of ferrocene compound on the basis of the total weight of the composition.

FIG. 1

(a)

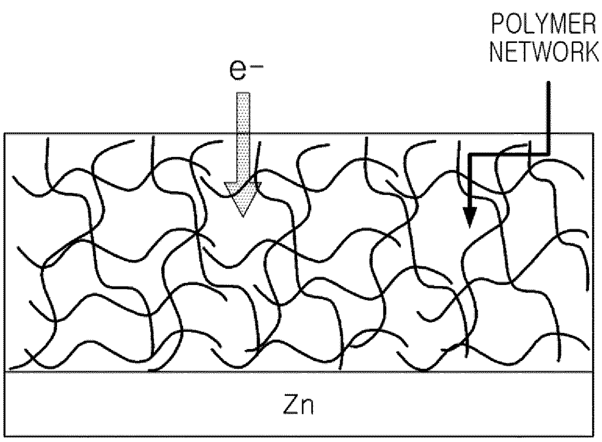




Printed by Jouve, 75001 PARIS (FR)

(Cont. next page)

FIG. 1

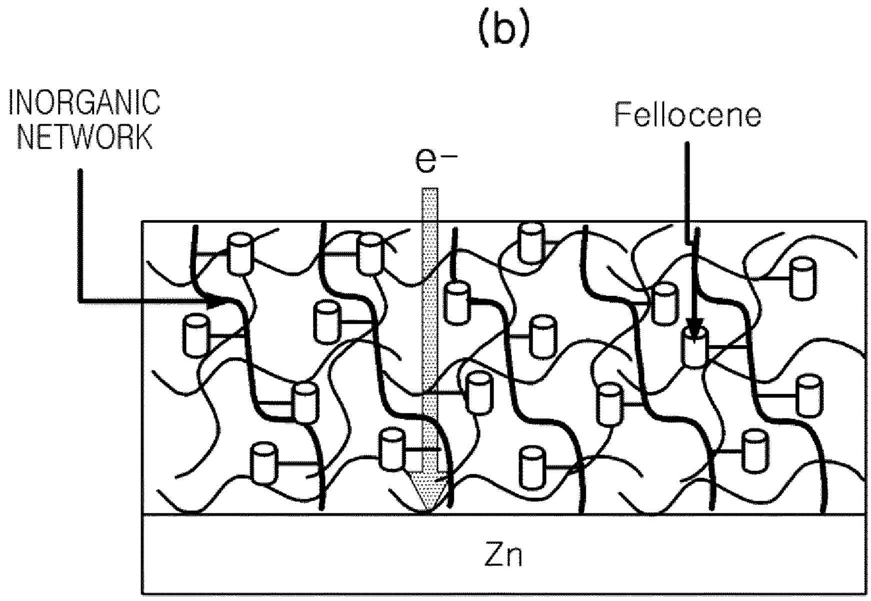

## Description

[Technical Field]

The present invention relates to a self-crosslinking organic-inorganic composite coating composition having excellent electrical conductivity and a composite coated steel sheet whose surface is treated using the same.

[Background Art]

It is necessary for a zinc-plated steel sheet used as a panel, mainly an inner plate, of a home appliance to have the following key quality characteristics. First, it is necessary for the zinc-plated steel sheet to have corrosion resistance so as to be used in various corrosive environments. It is necessary for most zinc-plated steel sheets to include a coating layer having corrosion resistance to protect a material in corrosive environments during transportation until it is delivered to a customer after manufacturing, during a processing process for manufacturing a product, and until the product is discarded after the product is used by a customer. Second, it is necessary for the zinc-plated steel sheet to have surface electrical conductivity. Electromagnetic waves generated when operating a home appliance are absorbed and removed by a surface of the steel sheet. Therefore, it is necessary for the zinc-plated steel sheet to have sufficient surface electrical conductivity. Third, it is necessary for the zinc-plated steel sheet to have excellent press processability necessary for processing parts. A zinc-plated layer is damaged by a die during press processing because it is soft. Therefore, it is necessary for the coating layer to be treated on the zinc-plated layer to have processability and lubricity to prevent the damage. Forth, it is necessary for the zinc-plated steel sheet to have chemical resistance. When the zinc-plated steel sheet is subjected to degreasing with an alkali solution after processing of the parts, or when the surface of the zinc-plated steel sheet is washed using various organic solvents such as ethanol, methyl ethyl ketone (MEK), and thinner, stability of the coating layer is necessary. In addition, it is necessary to prevent discoloration caused by deterioration of the coating layer due to heat generated inside a device during long-term use.

In general, the surface of the zinc-plated steel sheet is easily contaminated and is easily oxidized when exposed to the external environment because the plated layer may be soft. In order to make up for such a disadvantage, coating of an organic-inorganic compound protective film is performed. In addition, in order to protect the surface of the steel sheet, the steel sheet is transported in a wound coil state during transportation until being used by a customer. However, discoloration occurs frequently due to oxidation of the plated layer in the wrapped coil during long-term transportation and storage in a region with a high-temperature and high-humidity environment. It is known that such a phenomenon causes yellowing or blackening due to local galvanic oxidation of the zinc-plated layer in a limited oxygen and moisture atmosphere.

In order to solve such an oxidation discoloration problem, a method of coating a thick protective film or coating a double-layer is used. In the case of the former, the oxidation discoloration problem may be solved, but it is difficult to secure surface electrical conductivity for securing electromagnetic wave blocking properties necessary in the electric and electronic field. In the case of the latter, undercoating and top coating are performed. Therefore, it is necessary to perform not only a sophisticated thin film coating process to secure surface electrical conductivity but also mechanical double-layer coating.

Meanwhile, an organic-inorganic composite resin coated steel sheet is mainly used as a panel of an electronic device, and discoloration often occurs due to deterioration of the coating layer due to heat generated inside the device. In this case, a performance of the coating layer is deteriorated, and an appearance of the device is thus deteriorated, resulting in customer complaints. In general, a composition containing no aromatic ring compound causing discoloration due to deterioration is often used, but it is not effective.

In the present invention, in order to solve the oxidation discoloration problem in a high-temperature and high-humidity region, electrical conductivity is imparted to the coating layer by binding a ferrocene derivative to a polymer resin through coating of a single layer, oxidation of zinc metal is prevented, and penetration of corrosive factors such as moisture is effectively prevented, without equipment restrictions.

[Disclosure]

[Technical Problem]

An aspect of the present invention is to provide an organic-inorganic composite coating composition formed of an organic-inorganic binder compound capable of implementing excellent basic physical properties such as electrical conductivity, corrosion resistance, and processability of a surface coating layer applied to a panel for a home appliance, implementing excellent oxidation resistance of a plated layer by effectively preventing penetration of corrosive factors such as oxygen and moisture in a high-temperature and high-humidity environment, and preventing discoloration of a

coating layer due to heat generated in an electronic device, a carbodiimide curing agent compound having excellent solution stability and workability, and an additive having excellent corrosion resistance, and a self-crosslinking organic-inorganic composite coated steel sheet formed of the composition.

[Technical Solution]

According to an aspect of the present invention, an organic-inorganic composite resin composition for coating a surface of a zinc-plated steel sheet, contains: 5 to 25 wt% of a polymer resin; 4 to 20 wt% of a silane compound; 3 to 10 wt% of a curing agent; and 0.1 to 2 wt% of a ferrocene compound.

The ferrocene compound may be one or a mixture of two or more selected from the group consisting of ferrocene, vinylferrocene, ferrocenyl glycidyl ether, vinyl ferrocenyl glycidyl ether, ferrocenylmethyl methacrylate, 2-(methacryloyloxy)ethyl ferrocene carboxylate, and 2-(acryloyloxy)ethyl ferrocene carboxylate.

The polymer resin may be one or a mixture of two more selected from the group consisting of a polyurethane resin, a polyester resin, and a polyepoxy resin. A glass transition temperature (Tg) of the polymer resin may be -30 to 10°C, and a number average molecular weight of the polymer resin may be 20,000 to 100,000.

The curing agent may be a carbodiimide compound.

The organic-inorganic composite resin composition may further contain 2 to 10 wt% of a metal fluoride compound. The metal fluoride compound may be $HPF_6$, $H_2TiF_6$, $H_2ZrF_6$, $H_2SiF_6$, $MPF_6$, $M_2TiF_6$, $M_2ZrF_6$, or $M_2SiF_6$ (M = Li, Na, or K) .

The organic-inorganic composite resin composition may further contain an organometallic oxide, a dispersant, or wax.

According to another aspect of the present invention, a zinc-plated steel sheet includes a coating layer formed by applying the organic-inorganic composite resin composition, wherein a dry thickness of the coating layer is 0.1 to 1.0 μm.

[Advantageous Effects]

The present invention provides a zinc-plated steel sheet having excellent electrical conductivity of a coating layer by forming, on a zinc-plated steel sheet, a self-crosslinking organic-inorganic composite coating layer containing a polymer bound to a ferrocene compound, and having excellent corrosion resistance and blackening resistance of a processed portion, and excellent corrosion resistance and heat resistance in a high-temperature and high-humidity atmosphere.

In addition, the organic-inorganic composite coating composition of the present invention has a low curing temperature by a double curing mechanism due to an organic binder and a curing agent, and a self-crosslinking reaction of an inorganic binder compound, and having excellent processability by implementing a high hardness in the coating layer even in an ultra-thin coating. Therefore, the present invention provides a composite coated steel sheet capable of being transported in a wound coil state and having excellent corrosion resistance of the plated layer even during long-term storage in a high-temperature and high-humidity environment.

[Description of Drawings]

FIG. 1 is a conceptual view of a coating layer of a composite coated steel sheet of the present invention, in which (a) illustrates a comparative example and (b) illustrates an example.

FIG. 2 illustrates results of evaluating corrosion resistance of the composite coated steel sheet.

FIG. 3 illustrates standard plates for evaluating blackening resistance of a processed portion of the composite coated steel sheet.

FIG. 4 illustrates results of evaluating the blackening resistance of the processed portion of the composite coated steel sheet.

FIG. 5 illustrates results of evaluating heat resistance of the composite coated steel sheet.

FIG. 6 is a schematic view illustrating coated steel sheets laminated to evaluate high-temperature and high-humidity properties of the composite coated steel sheet.

FIG. 7 illustrates results of evaluating the high-temperature and high-humidity properties of the composite coated steel sheet.

FIG. 8 illustrates results of evaluating alkali resistance of the composite coated steel sheet.

[Best Mode for Invention]

Hereinafter, preferred embodiments of the present invention will be described. However, the embodiments of the present invention may be modified in several other forms, and the scope of the present invention is not limited to embodiments to be described below.

Historically, corrosion resistance and functionality of a zinc-plated steel sheet for a panel of a home appliance are secured by performing polymer resin coating on a coating layer subjected to a chromate chemical conversion treatment. However, since characteristics of the zinc-plated steel sheet have been mainly secured through the polymer resin coating, corresponding quality characteristics have been insufficient due to environmental damage of a chromate compound. In particular, corrosion resistance is obtained by a barrier effect and a self-healing mechanism of a coating layer. A chromate coating layer has excellent properties in comparison to a polymer resin coating layer. As a general method, a method of increasing a coating amount of a polymer resin is introduced to secure excellent corrosion resistance, but there is a problem in electromagnetic wave blocking properties of a home appliance due to insufficient surface electrical conductivity. In addition, in a case where a content of the polymer resin is increased or a polymer having a high glass transition temperature (Tg) is used in order to improve press processability, a surface hardness is improved to secure lubricity; however, it is difficult to obtain satisfactory physical properties other than the surface hardness.

In order to solve the above problem, in the present invention, a dual curing system using a curing reaction of an organic binder compound and a self-crosslinking reaction of an inorganic binder compound is introduced. A polymer resin having excellent flexibility and a low Tg is used to improve processability, which causes blackening after processing due to a movement phenomenon of the coating layer during press processing. In order to solve such problems, processability is improved by a method of preparing an organic-inorganic binder system by introducing a curing reaction between an organic polymer resin having a low Tg and an imine compound and an inorganic compound capable of crosslinking such as hydrolyzed silane. That is, flexibility of the coating layer is secured by a curing reaction between the polymer resin having a low Tg and an imine curing agent, and the improvement of the surface hardness of the coating layer is also secured by a crosslinking reaction of an inorganic silane compound, such that processability and chemical resistance, and denseness of the coating layer are secured.

According to an embodiment of the present invention, there is provided an organic-inorganic composite coating composition for coating a surface of a zinc-plated steel sheet, the organic-inorganic composite coating composition containing a polymer resin, a silane compound, a curing agent, and a ferrocene compound. The organic-inorganic composite coating composition may further contain a metal fluoride compound, an organometallic oxide, a dispersant, or wax.

In the embodiment, the polymer resin is not particularly limited, but one or a mixture of two or more selected from the group consisting of a polyurethane resin, a polyester resin, and a polyepoxy resin may be used, and a polyurethane resin may be preferably used.

A content of the polymer resin in the organic-inorganic composite coating composition may be 5 to 25 wt% with respect to a total weight of the organic-inorganic composite coating composition. When the content of the polymer resin is less than 5 wt%, it is difficult to obtain ductility necessary for processing due to a relatively large content of silane, and when the content of the polymer resin exceeds 25 wt%, processability may be excellent, but heat resistance and corrosion resistance in a high-temperature and high-humidity environment may be deteriorated, which is not preferable.

A polymer resin having a glass transition temperature (Tg) of -30 to 10°C may be used as the polymer resin. When the Tg of the polymer resin is lower than -30°C, the hardness of the coating layer is too low, resulting in deterioration of processability. When the Tg of the polymer resin is higher than 10°C, the hardness of the coating layer is increased due to a dual curing reaction with the silane compound, resulting in brittleness.

In addition, a number average molecular weight of the polymer resin is preferably 20,000 to 100,000. When the number average molecular weight of the polymer resin is less than 20,000, a curing degree of the coating layer is increased, resulting in deterioration of processability. When the number average molecular weight of the polymer resin exceeds 100,000, the coating layer may be brittle and solution stability may also be deteriorated.

In the embodiment, a silane compound and/or a hydrolysis compound thereof is used as the inorganic binder. Here, the hydrolysis compound of the silane compound refers to a compound obtained by hydrolyzing a silane compound or an oligomer obtained by forming a siloxane bond by a condensation reaction.

A content of the silane compound in the organic-inorganic composite coating composition may be 4 to 20 wt% with respect to the total weight of the organic-inorganic composite coating composition. In this case, when the content of the silane compound is less than 4 wt%, the effect of improving corrosion resistance and processability is insufficient, and when the content of the silane compound exceeds 20 wt%, solution stability is deteriorated and it is difficult to prepare the resin composition.

The silane compound is not particular limited, but it is possible to use, for example, one or a mixture of two or more selected from the group consisting of 3-aminopropyltrithoxysilane, 3-glycidoxypropyltrimethoxysilane, 3-methaglycodoxypropyltrimethoxysilane, N-(1,3-dimethylbutylidene)-3-(triethoxysilyl)-1-propylamine, N,N-bis[3-(trimethoxysilyl)propyl]ethylenediamine, N-β(aminoethyl)-γ-aminopropyltrimethoxysilane, N-β(aminoethyl)-γ-aminopropyltriethoxysilane, N-β(aminoethyl)-γ-aminopropylmethyltriethoxysilane, N-(β-aminoethyl)-γ-aminopropyltrimethoxysilane, γ-glycidoxypropyltriethoxysilane, γ-glycidoxypropyltrimethoxysilane, 2-(3,4-epoxycyclohexyl)ethyltrimethoxysilane, γ-methacryloxypropyltrimethoxysilane, γ-methacryloxypropyltrimethoxysilane, N-[2-(vinylbenzylamino)ethyl]-3-aminopropyltrimethoxysilane, N-decyltriethoxysilane, 2-(methoxy(polyethyleneoxy)propyl)trimethoxysilane, 7-octenyltrimethoxysilane, 2-(N-allylamino)propyl trimethoxysilane, bis-[(3-methyldimethoxysilyl)propyl] polypropylene oxide, 1,9-bis(trimethoxysilyl)nonane, bis(triethoxysilyl)octane, bis[(3-triethoxysilyl)propyl] urea, di-s-buthoxyaluminoxy triethoxysilane, (N,N'-diethyl-3-aminopropyl) trimethoxysilane, dodesylmethyldiethoxysilane, 2-(diphenylphosphino)ethyl triethoxysilane, dodesyltriethoxysilane, 5,6-epoxyhexyltriethoxysilane, (3-glycidoxypropyl)trimethoxysilane, (3-glycidoxypropyl)triethoxysilane, (heptadecafluoro-1,1,2,2-tetrahydrodecyl)triethoxysilane, hexadecyltrimethoxysilane, hexyltrimethoxysilane, methacryloxypropyl triethoxysilane, n-octadecyltriethoxysilane, n-octadecyltrimethoxysilane, n-octyltriethoxysilane, n-octyltrimethoxysilane, (tridecafluoro-1,1,2,2-tetrahydrooctyl) triethoxysilane, triethoxysilylpropyl)gluconamide, N-(triethoxysilylpropyl-o-polyethylene oxide urethane, ureidopropyltriethoxysilane, ureidopropyltrimethoxysilane, and o-(vinyloxymethyl)-N-(triethoxysilylpropyl) urethane.

The coating layer has excellent thermal stability by using the inorganic compound such as the silane compound, and discoloration due to deterioration of the coating layer is thus prevented. Therefore, heat resistance of the steel sheet is excellent. In addition, in general, since the polymer resin coating layer is porous, it is difficult to completely prevent penetration of corrosive factors such as air and moisture. In order to solve such a problem, the dense crosslinking property of the silane compound is effective in blocking a migration path of the corrosive factors through bonding with the polymer. Accordingly, it is possible to prevent a discoloration phenomenon due to surface oxidation, which is problematic during long-term transportation or storage of a winding coil in a tropical region with high-temperature and high-humidity.

In the embodiment, a carbodiimide compound having excellent solution stability and workability may be used as the curing agent. In general, when a steel sheet is processed at a high temperature, a yield strength of the steel sheet is increased due to a thermal curing phenomenon, which makes the press processing difficult. In general, a polymer resin coated steel sheet is subjected to formation of a coating layer through drying and curing at 170°C or higher. In this case, usually, the yield strength (Yp) is increased by 5% or more, which greatly affects the steel sheet during press processing. However, when the carbodiimide compound is used, a urea bond is formed by a reaction with a carboxylic group of the polymer resin to form a crosslinking bond. In this case, the curing reaction may proceed rapidly at room temperature or a low temperature, and solution stability and workability are excellent.

A content of the carbodiimide compound in the organic-inorganic composite coating composition may be 3 to 10 wt% with respect to the total weight of the organic-inorganic composite coating composition. In this case, when the content of the carbodiimide compound is less than 3 wt%, the effect of improving corrosion resistance and processability is insufficient, and when the content of the carbodiimide compound exceeds 10 wt%, the curing reaction is not complete, and physical properties of the coating layer such as chemical resistance are deteriorated, which is not preferable.

The carbodiimide compound is not particularly limited, but it is possible to use, for example, one or a mixture of two or more selected from the group consisting of N,N'-diisopropylcarbodiimide, 1-ethyl-3-(3-dimethylaminopropyl)carbodiimide, bis(trimethylsilyl)carbodiimide, dicyclohexylcarbodiimide, bis(o-methoxyphenyl) carbodiimide, diphenylcarbodiimide, N-(3-dimethylaminopropyl)-N'-ethylcarbonate, bis(2,6-diisopropylphenyl)carbodiimide, and Silia*Bond*® Carbodiimide (trade name) (SiliCycle Inc.).

In the embodiment, the ferrocene compound is added to improve electrical conductivity of the composite coating composition and binds to a polymer network through a reaction with a functional group of the polymer resin during the curing reaction of the composite coating composition, thereby imparting electrical conductivity to the coating layer.

The ferrocene compound is thermally stable and acts as an electron donor to form an electron migration channel in the coating layer. Therefore, electrical conductivity may be exhibited and the ferrocene compound may also serve to prevent oxidation of the zinc-plated layer even though a thickness of the coating layer is increased, unlike a general coating layer.

The ferrocene compound is not particularly limited, but it is possible to use, for example, one or a mixture of two or more selected from the group consisting of ferrocene (a), vinylferrocene (b), ferrocenyl glycidyl ether (c), vinyl ferrocenyl glycidyl ether (d), ferrocenylmethyl methacrylate (e), 2-(methacryloyloxy)ethyl ferrocenecarboxylate) (f), and 2- (acryloyloxy) ethyl ferrocenecarboxylate (g), as shown in the following Formula 1.

[Formula 1]

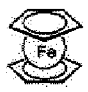 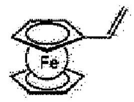 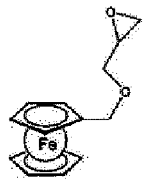 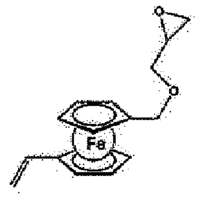

(a) (b) (c) (d)

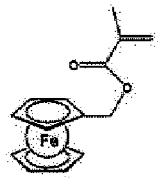 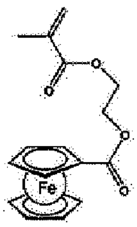 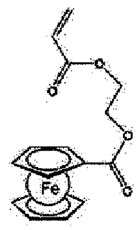

(e) (f) (g)

A content of the ferrocene compound in the organic-inorganic composite coating composition may be 0.1 to 2 wt% with respect to the total weight of the organic-inorganic composite coating composition. When the content of the ferrocene compound is less than 0.1 wt%, the reaction with the functional group of the polymer resin is small, which decreases the effect of improving the electrical conductivity. On the other hand, when the content of the ferrocene compound exceeds 2 wt%, the color of the coating layer is deteriorated, which is not preferable.

A metal fluoride compound may be additionally contained to improve corrosion resistance of the composite coating composition. $HPF_6$, $H_2TiF_6$, $H_2ZrF_6$, $H_2SiF_6$, $MPF_6$,$M_2TiF_6$, $M_2ZrF_6$, $M_2SiF_6$ (M = Li, Na, or K), and the like may be used as the metal fluoride compound.

The metal fluoride compound serves to improve the corrosion resistance through bonding between the composite coating composition and the steel sheet or a reaction with the polymer resin according to the embodiment. The content of the metal fluoride compound in the organic-inorganic composite coating composition may be 2 to 10 wt% with respect to the total weight of the organic-inorganic composite coating composition. When the content of the metal fluoride compound is less than 2 wt%, the reaction with the functional group of the polymer resin is deteriorated, which decreases the effect of improving corrosion resistance. When the content of the metal fluoride compound exceeds 10 wt%, an entanglement phenomenon occurs by acceleration of a self-reaction of the polymer resin composition, resulting in deterioration of solution stability and difficulty in implementing adhesion of the coating layer.

The resin composition according to the embodiment may further selectively contain an organometallic oxide, a dispersant, wax, and the like.

The organometallic oxide may serve as a catalyst to improve a binding ability of the silane compound and forms a chelate compound to improve corrosion resistance itself, and also has the effect of improving weldability because the organometallic oxide contains metal components.

One or more selected from organic titanate and organic zirconate may be used as the organometallic oxide. A content of the organometallic oxide in the composite coating composition is preferably 2 wt% or less with respect to the total weight of the composite coating composition. This is because the effect of improving a silica binding ability and the effect of improving corrosion resistance are insufficient even when the content of the organometallic oxide to be added exceeds 2 wt%, gelation of a resin composition solution may occur, and the cost increases significantly.

A dispersant may be contained to improve wettability of the composite coating composition solution and dispersibility of amorphous silica. The dispersant may be one or more selected from a siloxane (polyether modified polydimethylsiloxane) compound and an ester (hydro functional carboxylic acid ester) compound.

A content of the dispersant in the composite coating composition is 2 wt% or less. When the content of the dispersant exceeds 2 wt%, the wettability of the solution is too increased. Therefore, it may be difficult to adjust an adhesion amount when forming the coating layer.

Meanwhile, wax may be added to prevent the coating layer from being delaminated during press processing of the composite coated steel sheet. The wax is surface-modified polyethylene or fluorine-based polyethylene wax, and is added in an amount of 2 wt% or less with respect to the total weight of the composite coating composition. This is because even when the wax is added in an amount of more than 2 wt%, an effect of lowering friction force is insufficient and the corrosive factors easily penetrate due to elution of the wax component to the surface during drying of the coating layer, resulting in deterioration of corrosion resistance. In addition, when lubricity is imparted after formation of the coating layer and the composite coating composition solution is prepared, it is preferable to use wax having a melting point of

100°C or higher, in terms of work convenience.

According to another embodiment of the present invention, there is provided a composite coated steel sheet including a coating layer formed by applying the composite coating composition on a zinc-plated steel sheet.

The coating layer is formed by applying the composite coating composition in an adhesion amount of 500 to 1,500 $mg/m^2$ and drying the composite coating composition at a temperature of 150°C. A thickness of the dried coating layer may be 0.1 to 1.0 μm, and a steel sheet having improved electrical conductivity may be obtained by forming an electron migration channel in the coating layer by electron donating properties of the ferrocene compound.

[Mode for Invention]

Examples

Hereinafter, Examples of the present invention will be described in detail. However, the following Examples are provided only for assisting in the understanding of the present invention, but are not intended to limit the present invention.

<u>Manufacture of plated steel sheet</u>

A zinc-plated layer having a zinc adhesion amount of 20 $g/m^2$ was formed on a cold-rolled steel sheet through electroplating.

<u>Example 1 to Example 36</u>

In preparation of a composite coating composition, a polyurethane emulsion resin having a glass transition temperature of -28°C and a number average molecular weight of 50,000 and hydrolyzed ureidopropyltriethoxysilane as main compounds, a carbodiimide compound (Silia*Bond*® Carbodiimide, SiliCycle Inc.) as a curing agent, a titanium fluoride compound and a ferrocene compound (Vinyl Ferrocene, Aldrich Chemical Co.) as additives, a polysiloxane-based dispersant, surface-modified polyethylene wax (PE WAX), and the balance of pure water were sequentially added with compositions shown in Table 1, and aging was performed for 24 hours, thereby preparing an organic-inorganic composite coating composition having a pH of 5 ± 0.5.

Thereafter, the prepared composition was applied onto the zinc-plated steel sheet using a roll coater, and the steel sheet was baked and dried so that the temperature of the steel sheet was 150°C, thereby manufacturing a coated steel sheet having an adhesion amount of the coating layer of 0.5 to 1.5 $g/m^2$.

[Table 1]

| Classification | Composition of solution composition (wt%) | | | | | | | |
|---|---|---|---|---|---|---|---|---|
| | Polyurethane | Silane compound | Carbodiimide curing agent | Titanium fluoride | Ferrocene compound | Dispersant | Wax | Solvent |
| Example 1 | 5 | 10 | 3 | 2 | 0.1 | 0.3 | 0.1 | Balance of pure water |
| Example 2 | 5 | 10 | 3 | 4 | 0.5 | 0.3 | 0.1 | Balance of pure water |
| Example 3 | 5 | 10 | 5 | 2 | 1.0 | 0.3 | 0.1 | Balance of pure water |
| Example 4 | 5 | 10 | 5 | 4 | 0.1 | 0.3 | 0.1 | Balance of pure water |
| Example 5 | 5 | 7 | 3 | 2 | 0.5 | 0.3 | 0.1 | Balance of pure water |
| Example 6 | 5 | 7 | 3 | 4 | 1.0 | 0.3 | 0.1 | Balance of pure water |
| Example 7 | 5 | 7 | 5 | 2 | 0.1 | 0.3 | 0.1 | Balance of pure water |
| Example 8 | 5 | 7 | 5 | 4 | 0.5 | 0.3 | 0.1 | Balance of pure water |
| Example 9 | 5 | 4 | 3 | 2 | 1.0 | 0.3 | 0.1 | Balance of pure water |
| Example 10 | 5 | 4 | 3 | 4 | 0.1 | 0.3 | 0.1 | Balance of pure water |
| Example 11 | 5 | 4 | 5 | 2 | 0.5 | 0.3 | 0.1 | Balance of pure water |
| Example 12 | 5 | 4 | 5 | 4 | 1.0 | 0.3 | 0.1 | Balance of pure water |
| Example 13 | 10 | 10 | 3 | 2 | 0.1 | 0.3 | 0.1 | Balance of pure water |
| Example 14 | 10 | 10 | 3 | 4 | 0.5 | 0.3 | 0.1 | Balance of pure water |
| Example 15 | 10 | 10 | 5 | 2 | 1.0 | 0.3 | 0.1 | Balance of pure water |
| Example 16 | 10 | 10 | 5 | 4 | 0.1 | 0.3 | 0.1 | Balance of pure water |
| Example 17 | 10 | 7 | 3 | 2 | 0.5 | 0.3 | 0.1 | Balance of pure water |
| Example 18 | 10 | 7 | 3 | 4 | 1.0 | 0.3 | 0.1 | Balance of pure water |
| Example 19 | 10 | 7 | 5 | 2 | 0.1 | 0.3 | 0.1 | Balance of pure water |
| Example 20 | 10 | 7 | 5 | 4 | 0.5 | 0.3 | 0.1 | Balance of pure water |
| Example 21 | 10 | 4 | 3 | 2 | 1.0 | 0.3 | 0.1 | Balance of pure water |
| Example 22 | 10 | 4 | 3 | 4 | 0.1 | 0.3 | 0.1 | Balance of pure water |
| Example 23 | 10 | 4 | 5 | 2 | 0.5 | 0.3 | 0.1 | Balance of pure water |
| Example 24 | 10 | 4 | 5 | 4 | 1.0 | 0.3 | 0.1 | Balance of pure water |

(continued)

| Classification | Composition of solution composition (wt%) | | | | | | | |
|---|---|---|---|---|---|---|---|---|
| | Polyurethane | Silane compound | Carbodiimide curing agent | Titanium fluoride | Ferrocene compound | Dispersant | Wax | Solvent |
| Example 25 | 15 | 10 | 3 | 2 | 0.1 | 0.3 | 0.1 | Balance of pure water |
| Example 26 | 15 | 10 | 3 | 4 | 0.5 | 0.3 | 0.1 | Balance of pure water |
| Example 27 | 15 | 10 | 5 | 2 | 1.0 | 0.3 | 0.1 | Balance of pure water |
| Example 28 | 15 | 10 | 5 | 4 | 0.1 | 0.3 | 0.1 | Balance of pure water |
| Example 29 | 15 | 7 | 3 | 2 | 0.5 | 0.3 | 0.1 | Balance of pure water |
| Example 30 | 15 | 7 | 3 | 4 | 1.0 | 0.3 | 0.1 | Balance of pure water |
| Example 31 | 15 | 7 | 5 | 2 | 0.1 | 0.3 | 0.1 | Balance of pure water |
| Example 32 | 15 | 7 | 5 | 4 | 0.5 | 0.3 | 0.1 | Balance of pure water |
| Example 33 | 15 | 4 | 3 | 2 | 1.0 | 0.3 | 0.1 | Balance of pure water |
| Example 34 | 15 | 4 | 3 | 4 | 0.1 | 0.3 | 0.1 | Balance of pure water |
| Example 35 | 15 | 4 | 5 | 2 | 0.5 | 0.3 | 0.1 | Balance of pure water |
| Example 36 | 15 | 4 | 5 | 4 | 1.0 | 0.3 | 0.1 | Balance of pure water |

Comparative Example 1 to Comparative Example 8

In preparation of a composite coating composition, an organic-inorganic composite coating composition was prepared by sequentially adding components with compositions shown in Table 2 and performing aging for 24 hours. In the composition in each of Comparative Examples, an organotitanium compound and silica sol were used as additives.

Thereafter, the prepared composition was applied onto the zinc-plated steel sheet using a roll coater, and the steel sheet was baked and dried so that the temperature of the steel sheet was 180°C, thereby manufacturing a coated steel sheet having an adhesion amount of the coating layer of 1.0 $g/m^2$.

[Table 2]

| Classification | Composition of solution composition (wt%) | | | | | | | |
|---|---|---|---|---|---|---|---|---|
| | Polymer resin | Inorganic binder | Melamine curing agent | Additive | Ferrocene compound | Dispersant | Wax | Solvent |
| Comparative Example 1 | Polyurethane emulsion resin 12 | - | 3 | 2 | - | 0.3 | 0.1 | Balance of pure water |
| Comparative Example 2 | Polyurethane emulsion resin 12 | - | 5 | 2 | - | 0.3 | 0.1 | Balance of pure water |
| Comparative Example 3 | Polyacryl-mo dified urethane 12 | Silica sol 2 | 3 | 2 | - | 0.3 | 0.1 | Balance of pure water |
| Comparative Example 4 | Polyacryl-mo dified urethane 13 | Silica sol 2 | 5 | 2 | - | 0.3 | 0.1 | Balance of pure water |
| Comparative Example 5 | Polyurethane emulsion resin 12 | - | 3 | 2 | - | 0.3 | 0.1 | Balance of pure water |
| Comparative Example 6 | Polyurethane emulsion resin 13 | - | 5 | 2 | - | 0.3 | 0.1 | Balance of pure water |
| Comparative Example 7 | Polyacryl-mo dified urethane 15 | Silica sol 2 | 3 | 2 | - | 0.3 | 0.1 | Balance of pure water |
| Comparative Example 8 | Polyacryl-mo dified urethane 15 | Silica sol 2 | 5 | 2 | - | 0.3 | 0.1 | Balance of pure water |

Experimental Examples

As for the quality evaluation of the coated steel sheet, physical properties necessary for a chrome-free anti-fingerprint steel sheet, such as solution stability, corrosion resistance, processing blackening, chemical resistance, electrical conductivity, heat resistance, and high-temperature and high-humidity properties were evaluated. Each of the physical properties was measured by the following method.

1. Solution stability

In order to measure solution stability of the composite coating composition solution, immediately after the preparation of the solution, an initial viscosity ($\eta_i$) was measured. After the solution was left in an oven at a temperature of 50°C for 5 days, the solution was cooled to room temperature and then stirred at room temperature for 10 days, a later viscosity ($\eta_f$) was measured to calculate a change value, and then the evaluation was carried out according to the evaluation criteria. The evaluation results of the solution stability are shown in Tables 3 and 4.

$$D\eta = (\eta_f - \eta_i) / \eta_i \times 100\ (\%)$$

<Evaluation criteria>

◎: Dη was less than 1.5% or gelation was not observed with the naked eye
o: Dη was 1.5 to less than 3% or gelation was not observed with the naked eye
Δ: Dη was 3 to less than 5% or gelation was not observed with the naked eye
X: Dη was 5% or more or gelation was observed with the naked eye

2. Evaluation of solid content

1 g of the composite coating composition solution was collected and then left at a temperature of 150°C for 30 minutes, the composite coating composition solution was cooled to room temperature, and a weight thereof was measured and expressed as a percentage. The evaluation results of the solid content are shown in Tables 3 and 4.

3. Corrosion resistance

In order to evaluate corrosion resistance of a flat portion, the composite coated steel sheet was cut into a size of 70 mm x 150 mm (width x length) to prepare a specimen, salt water having a concentration of 5% and a temperature of 35°C was evenly sprayed to the specimen at a spray pressure of 1 kg/cm$^2$, and then, a time until a white rust having an area corresponding to 5% of a total area was formed on the surface of the steel sheet was measured. In addition, after the specimen was subjected to 7 mm Erichsen processing, the corrosion resistance of the flat portion was evaluated by the following method. The evaluation results of the corrosion resistance are shown in Tables 3 and 4 and FIG. 2.

<Evaluation criteria>

◎: 96 hours in flat portion and 72 hours or longer in processed portion
o: 72 hours or longer and shorter than 96 hours in flat portion and 48 hours or longer and shorter than 72 hours in processed portion
Δ: 48 hours or longer and shorter than 72 hours in flat portion and 24 hours or longer and shorter than 48 hours in processed portion
X: shorter than 48 hours in flat portion or shorter than 24 hours in processed portion

4. Blackening resistance of processed portion

The composite coated steel sheet was cut into a size of 70 mm x 70 mm (width x length) to prepare a specimen, a lubrication free roller was reciprocated on the specimen at a pressure of 0.25 kgf/mm$^2$ 30 times, a discoloration degree of the processed portion was observed with the naked eye, and the evaluation was carried out by comparing the observation results with the standard plates for evaluation of FIG. 3. The evaluation results of the blackening resistance of the processed portion are shown in Tables 3 and 4 and FIG. 4.

<Evaluation criteria>

◎: The discoloration degree of the processed portion was level 0 to level 1
○: The discoloration degree of the processed portion was higher than level 1 and lower than level 2
Δ: The discoloration degree of the processed portion was higher than level 2 and lower than level 3
X: The discoloration degree of the processed portion was higher than level 3 and lower than level 4

5. Solvent resistance

The composite coated steel sheet was cut into a size of 70 mm x 150 mm (width x length) to prepare a specimen, the specimen was reciprocally rubbed 10 times with a cotton gauze soaked with a methyl ethyl ketone (MEK) reagent at a load of 1 Kg, and a color difference (ΔE) was measured by comparing the results with the original steel sheet. The evaluation results of the solvent resistance are shown in Tables 3 and 4.

<Evaluation criteria>

◎: The color difference was 0 to 0.50
○: The color difference was more than 0.50 and 1.0 or less
Δ: The color difference was more than 1.0 and 1.5 or less
X: The color difference was more than 1.5

6. Surface electrical conductivity

The composite coated steel sheet was cut into a size of 300 mm x 300 mm (width x length) to prepare a specimen, surface resistance was measured 10 times at 10 points of the specimen using a 4-probe Loresta-GP (manufactured by Mitsubishi Chemical Analytech Co., Ltd.) surface resistance measuring device. The measured results were evaluated according to the following evaluation criteria. The results are shown in Tables 3 and 4.

<Evaluation criteria>

◎: The reference resistance value of 0.1 mΩ or less was observed 10 times
○: The reference resistance value of 0.1 mΩ or less was observed 8 or 9 times
Δ: The reference resistance value of 0.1 mΩ or less was observed 6 or 7 times
X: The reference resistance value of 0.1 mΩ or less was observed less than 6 times

7. Heat resistance

The composite coated steel sheet was cut into a size of 70 mm x 70 mm (width x length) to prepare a specimen, the specimen was left in a dry oven at a temperature of 250°C for 1 hour, the specimen was cooled, and then, a color difference (ΔE) was measured by comparing the results with the original steel sheet. The measured color difference was evaluated according to the following evaluation criteria. The results are shown in Tables 3 and 4 and FIG. 5.

<Evaluation criteria>

◎: The color difference (ΔE) was less than 7
○: The color difference (ΔE) was 7 or more and less than 9
Δ: The color difference (ΔE) was 9 or more and less than 12
X: The color difference (ΔE) was 12 or more
8. High-temperature and high-humidity properties
In order to simulate a wound coil state, the coated steel sheets were laminated as illustrated in FIG. 6, the laminated steel sheet was closely wrapped with a wrapping paper, and then, the high-temperature and high-humidity evaluation was carried out by pressurizing the coated steel sheet at a pressure similar to the coil winding pressure. The composite coated steel sheet was cut into a size of 70 mm x 70 mm (width x length) to prepare a specimen, 10 sheets of the specimens were laminated so that the coating surfaces faced each other, the specimen was closely wrapped with a coil wrapping paper for export and then pressurized at a pressure of 1 ton, the pressurized specimen was left under a constant temperature and humidity condition (65°C, 95% relative humidity condition) for 192 hours, and then, an average color difference (ΔE) was measured by comparing the results with the original steel sheet. The measured color difference was evaluated according to the following evaluation criteria. The results are shown in Tables 3 and 4 and FIG. 7.

<Evaluation criteria>

◎: The average color difference (ΔE) was less than 1.5

○: The average color difference (ΔE) was 1.5 or more and less than 2

Δ: The average color difference (ΔE) was 2 or more and less than 3

X: The average color difference (ΔE) was 3 or more

9. Alkali resistance

As for the alkali resistance evaluation, the composite coated steel sheet was cut into a size of 150 mm x 70 mm (width x length) to prepare a specimen, strong alkali degreasing agents (manufactured by DAE HAN PARKERIZING CO., LTD.) DP FC-L4460A and DP FC-L4460B were dissolved in amounts of 20 g and 10 g, respectively, in 1 L pure water, the specimen was immersed therein at a temperature of 60°C for 20 minutes, and then, an average color difference (ΔE) was measured by comparing the results with the original steel sheet. The measured color difference was evaluated according to the following evaluation criteria. The results are shown in Tables 3 and 4 and FIG. 8.

<Evaluation criteria>

◎: The average color difference (ΔE) was less than 1.5

○: The average color difference (ΔE) was 1.5 or more and less than 2

Δ: The average color difference (ΔE) was 2 or more and less than 2.5

X: The average color difference (ΔE) was 3 or more

10. Yield strength

A yield strength was measured by stretching the specimen at a speed of 10 mm/min using a tensile tester and using a value of the tensile strength at a 0.2% yield point. A change value of the yield strength (Δyp, Mpa) measured after manufacture of the coated steel sheet is a yield strength difference after and before the composite resin coating. The measured change values of the yield strength are shown in Tables 3 and 4.

[Table 3] Results of experiments in Examples 1 to 36

| Classification | Coating amount ($g/m^2$) | Solution stability | Solid content (wt%) | Corrosion resistance | Blackening resistance of processed portion | Solvent resistance | Surface electrical conductivity | Heat resistance | High-temperature and high-humidity properties | Alkali resistance | Change in yield strength |
|---|---|---|---|---|---|---|---|---|---|---|---|
| Example 1 | 0.5 | ◎ | 14 | ◎ | ○ | ◎ | ◎ | ◎ | ◎ | ◎ | ≤ 3 |
| Example 2 | 1.0 | ◎ | 16 | ◎ | ◎ | ◎ | ◎ | ◎ | ◎ | ◎ | ≤ 3 |
| Example 3 | 1.5 | ◎ | 16 | ◎ | ◎ | ◎ | ◎ | ◎ | ◎ | ◎ | ≤ 3 |
| Example 4 | 0.5 | ◎ | 17 | ◎ | ○ | ◎ | ◎ | ◎ | ◎ | ◎ | ≤ 3 |
| Example 5 | 1.0 | ◎ | 12 | ◎ | ◎ | ◎ | ◎ | ◎ | ◎ | ◎ | ≤ 3 |
| Example 6 | 1.5 | ◎ | 14 | ◎ | ◎ | ◎ | ◎ | ◎ | ◎ | ◎ | ≤ 3 |
| Example 7 | 0.5 | ◎ | 14 | ◎ | ○ | ◎ | ◎ | ◎ | ◎ | ◎ | ≤ 3 |
| Example 8 | 1.0 | ◎ | 15 | ◎ | ◎ | ◎ | ◎ | ◎ | ◎ | ◎ | ≤ 3 |
| Example 9 | 1.5 | ◎ | 10 | ◎ | ◎ | ◎ | ◎ | ◎ | ◎ | ◎ | ≤ 3 |
| Example 10 | 0.5 | ◎ | 11 | ◎ | ◎ | ◎ | ◎ | ◎ | ◎ | ◎ | ≤ 3 |
| Example 11 | 1.0 | ◎ | 11 | ◎ | ◎ | ◎ | ◎ | ◎ | ◎ | ◎ | ≤ 3 |
| Example 12 | 1.5 | ◎ | 13 | ◎ | ◎ | ◎ | ◎ | ◎ | ◎ | ◎ | ≤ 3 |
| Example 13 | 0.5 | ◎ | 18 | ◎ | ○ | ◎ | ◎ | ◎ | ◎ | ◎ | ≤ 3 |
| Example 14 | 1.0 | ◎ | 19 | ◎ | ◎ | ◎ | ◎ | ◎ | ◎ | ◎ | ≤ 3 |
| Example 15 | 1.5 | ◎ | 19 | ◎ | ◎ | ◎ | ◎ | ◎ | ◎ | ◎ | ≤ 3 |
| Example 16 | 0.5 | ◎ | 21 | ◎ | ○ | ◎ | ◎ | ◎ | ◎ | ◎ | ≤ 3 |
| Example 17 | 1.0 | ◎ | 16 | ◎ | ◎ | ◎ | ◎ | ◎ | ◎ | ◎ | ≤ 3 |
| Example 18 | 1.5 | ◎ | 17 | ◎ | ◎ | ◎ | ◎ | ◎ | ◎ | ◎ | ≤ 3 |
| Example 19 | 0.5 | ◎ | 17 | ◎ | ○ | ◎ | ◎ | ◎ | ◎ | ◎ | ≤ 3 |
| Example 20 | 1.0 | ◎ | 18 | ◎ | ◎ | ◎ | ◎ | ◎ | ◎ | ◎ | ≤ 3 |
| Example 21 | 1.5 | ◎ | 14 | ◎ | ◎ | ◎ | ◎ | ◎ | ◎ | ◎ | ≤ 3 |
| Example 22 | 0.5 | ◎ | 15 | ◎ | ○ | ◎ | ◎ | ◎ | ◎ | ◎ | ≤ 3 |
| Example 23 | 1.0 | ◎ | 15 | ◎ | ◎ | ◎ | ◎ | ◎ | ◎ | ◎ | ≤ 3 |

(continued)

| Classification | Coating amount ($g/m^2$) | Solution stability | Solid content (wt%) | Corrosion resistance | Blackening resistance of processed portion | Solvent resistance | Surface electrical conductivity | Heat resistance | High-temperature and high-humidity properties | Alkali resistance | Change in yield strength |
|---|---|---|---|---|---|---|---|---|---|---|---|
| Example 24 | 1.5 | ◎ | 16 | ◎ | ◎ | ◎ | ◎ | ◎ | ◎ | ◎ | ≤ 3 |
| Example 25 | 0.5 | ◎ | 21 | ◎ | ○ | ◎ | ◎ | ◎ | ◎ | ◎ | ≤ 3 |
| Example 26 | 1.0 | ◎ | 23 | ◎ | ◎ | ◎ | ◎ | ◎ | ◎ | ◎ | ≤ 3 |
| Example 27 | 1.5 | ◎ | 23 | ◎ | ◎ | ◎ | ◎ | ◎ | ◎ | ◎ | ≤ 3 |
| Example 28 | 0.5 | ◎ | 24 | ◎ | ○ | ◎ | ◎ | ◎ | ◎ | ◎ | ≤ 3 |
| Example 29 | 1.0 | ◎ | 19 | ◎ | ◎ | ◎ | ◎ | ◎ | ◎ | ◎ | ≤ 3 |
| Example 30 | 1.5 | ◎ | 21 | ◎ | ◎ | ◎ | ◎ | ◎ | ◎ | ◎ | ≤ 3 |
| Example 31 | 0.5 | ◎ | 21 | ◎ | ○ | ◎ | ◎ | ◎ | ◎ | ◎ | ≤ 3 |
| Example 32 | 1.0 | ◎ | 22 | ◎ | ◎ | ◎ | ◎ | ◎ | ◎ | ◎ | ≤ 3 |
| Example 33 | 1.5 | ◎ | 17 | ◎ | ◎ | ◎ | ◎ | ◎ | ◎ | ◎ | ≤ 3 |
| Example 34 | 0.5 | ◎ | 18 | ◎ | ○ | ◎ | ◎ | ◎ | ◎ | ◎ | ≤ 3 |
| Example 35 | 1.0 | ◎ | 18 | ◎ | ◎ | ◎ | ◎ | ◎ | ◎ | ◎ | ≤ 3 |
| Example 36 | 1.5 | ◎ | 20 | ◎ | ◎ | ◎ | ◎ | ◎ | ◎ | ◎ | ≤ 3 |

[Table 4] Results of experiments in Comparative Examples 1 to 8

| Classification | Coating amount ($g/m^2$) | Solution stability | Solid content (wt%) | Corrosion resistance | Blackening resistance of processed portion | Solvent resistance | Surface electrical conductivity | Heat resistance | High-temperature and high-humidity properties | Alkali resistance | Change in yield strength |
|---|---|---|---|---|---|---|---|---|---|---|---|
| Example 1 | 0.5 | ○ | 11 | ○ | Δ | ○ | Δ | ○ | Δ | Δ | ≥ 10 |
| Example 2 | 1.0 | ○ | 12 | ○ | Δ | ○ | Δ | ○ | Δ | Δ | ≥ 10 |
| Example 3 | 1.5 | ○ | 14 | ○ | Δ | ○ | Δ | Δ | Δ | Δ | ≥ 10 |
| Example 4 | 0.5 | ○ | 16 | ○ | Δ | ○ | Δ | Δ | Δ | Δ | ≥ 10 |
| Example 5 | 1.0 | ○ | 14 | ○ | Δ | ○ | Δ | ○ | Δ | Δ | ≥ 10 |
| Example 6 | 1.5 | ○ | 16 | ○ | Δ | ○ | Δ | ○ | Δ | Δ | ≥ 10 |
| Example 7 | 0.5 | ○ | 16 | ○ | Δ | ○ | Δ | ○ | Δ | Δ | ≥ 10 |
| Example 8 | 1.0 | ○ | 17 | ○ | Δ | ○ | Δ | ○ | Δ | Δ | ≥ 10 |

In the cases of the composite coating compositions of Examples 1 to 36, each containing a polyurethane emulsion resin, ureidopropyltriethoxysilane, a carbodiimide curing agent, titanium fluoride, and vinyl ferrocene in appropriate ranges, the solution stability of the composition solution was excellent, and the solid content was high as compared to those in Comparative Examples.

In addition, in the case where the coating layer was formed by applying each of the compositions of Examples 1 to 36 on the zinc-plated steel sheet, processability was excellent due to the double curing reaction and the surface abrasion resistance was improved, resulting in significant prevention of the surface blackening phenomenon. In addition, the heat resistance and the high-temperature and high-humidity properties were improved by the crosslinking reaction of the inorganic silane compound, and thus, the oxidation of the plated layer was prevented during long-term transportation in the wound coil state and during long-term storage in the high-temperature and high-humidity environment. Since the ferrocene compound was added, the electrical conductivity was improved, and oxidation and discoloration resistance of the zinc-plated layer was improved.

On the other hand, in the cases of Comparative Examples 1 to 8, the silane compound was not contained, the double curing reaction did not occur. Therefore, the corrosion resistance and the blackening resistance of the processed portion were significantly deteriorated, and the color differences were large in the evaluations of the heat resistance, the high-temperature and high-humidity properties, and the alkali resistance, as compared to those in Examples 1 to 36. In addition, since the ferrocene compound was not contained, the electrical conductivity of the coating layer was low.

In the evaluation of the yield strength of the coated steel sheet, in the cases of Examples 1 to 36, the curing was performed at a temperature of 150°C, which was relatively low, and the measured change in yield strength was 3 MPa or less. This is an excellent result as compared to the case where the change in yield strength is 10 MPa or more in each of Comparative Examples, and shows excellent press formability.

## Claims

**1.** An organic-inorganic composite resin composition for coating a surface of a zinc-plated steel sheet, comprising:

5 to 25 wt% of a polymer resin;
4 to 20 wt% of a silane compound;
3 to 10 wt% of a curing agent; and
0.1 to 2 wt% of a ferrocene compound.

**2.** The organic-inorganic composite resin composition of claim 1, wherein the ferrocene compound is one or a mixture of two or more selected from the group consisting of ferrocene, vinylferrocene, ferrocenyl glycidyl ether, vinyl ferrocenyl glycidyl ether, ferrocenylmethyl methacrylate, 2-(methacryloyloxy)ethyl ferrocene carboxylate, and 2-(acryloyloxy)ethyl ferrocene carboxylate.

**3.** The organic-inorganic composite resin composition of claim 1, wherein the polymer resin is one or a mixture of two more selected from the group consisting of a polyurethane resin, a polyester resin, and a polyepoxy resin.

**4.** The organic-inorganic composite resin composition of claim 1, wherein a glass transition temperature (Tg) of the polymer resin is -30 to 10°C, and a number average molecular weight of the polymer resin is 20,000 to 100,000.

**5.** The organic-inorganic composite resin composition of claim 1, wherein the curing agent is a carbodiimide compound.

**6.** The organic-inorganic composite resin composition of claim 1, further comprising 2 to 10 wt% of a metal fluoride compound.

**7.** The organic-inorganic composite resin composition of claim 6, wherein the metal fluoride compound is $HPF_6$, $H_2TiF_6$, $H_2ZrF_6$, $H_2SiF_6$, $MPF_6$, $M_2TiF_6$, $M_2ZrF_6$, or $M_2SiF_6$ (M = Li, Na, or K) .

**8.** The organic-inorganic composite resin composition of claim 1, further comprising an organometallic oxide, a dispersant, or wax.

**9.** A zinc-plated steel sheet comprising a coating layer formed by applying the organic-inorganic composite resin composition of any one of claims 1 to 8,
wherein a dry thickness of the coating layer is 0.1 to 1.0 $\mu$m.

FIG. 1

(a)

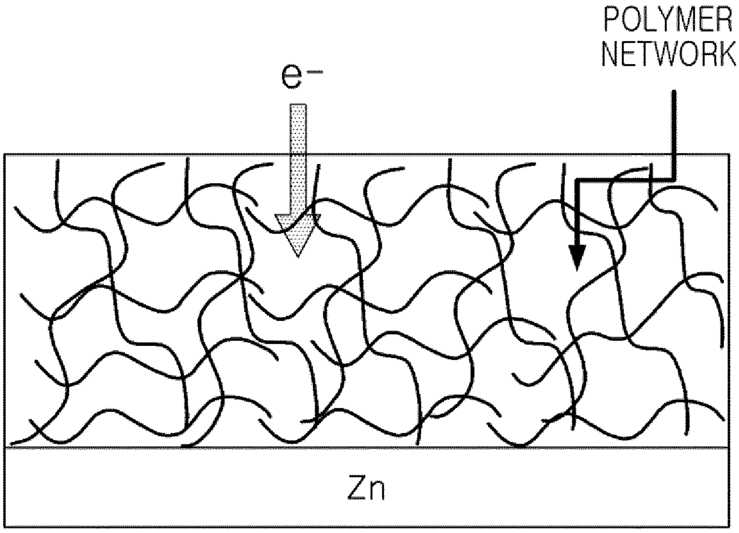


(b)

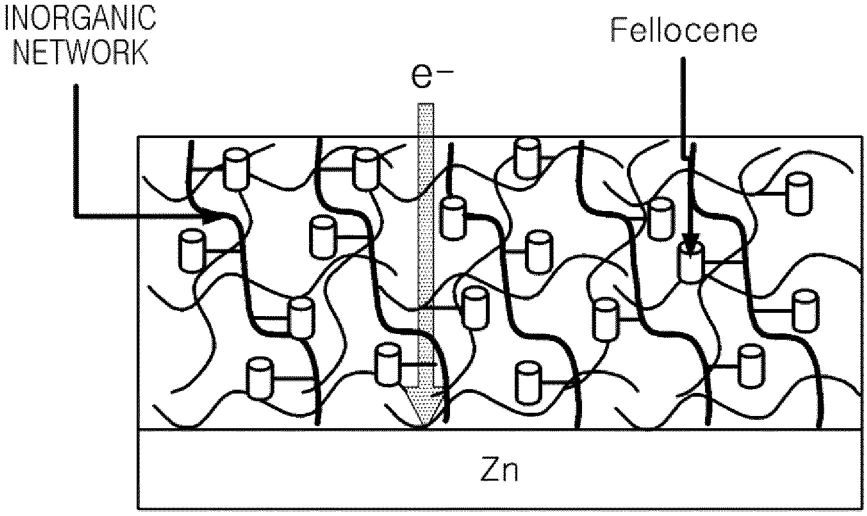

FIG. 2

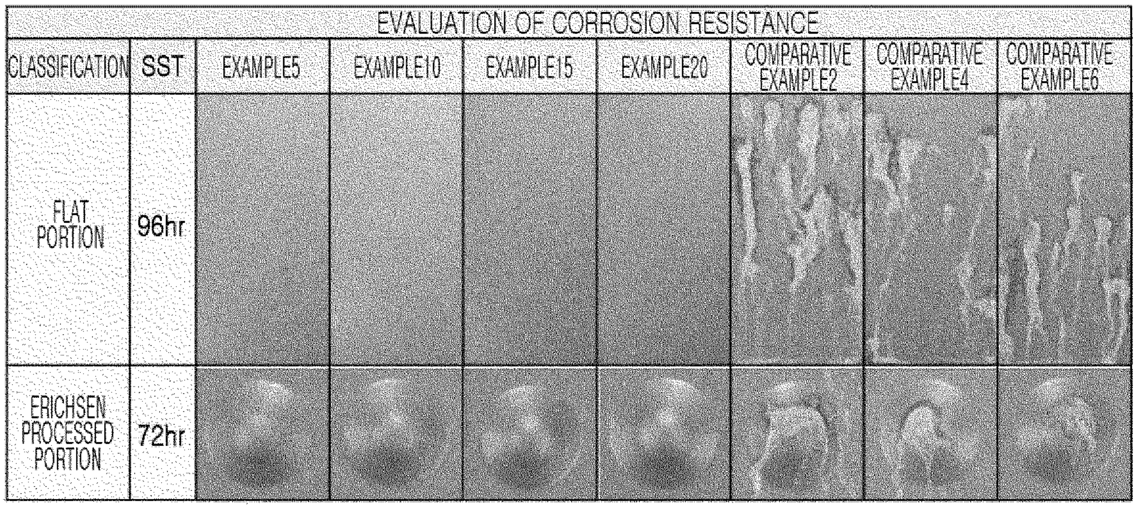


FIG. 3

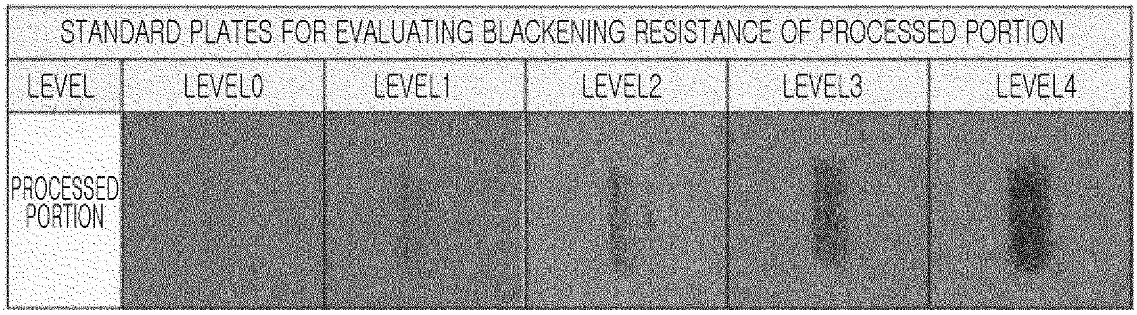


FIG. 4

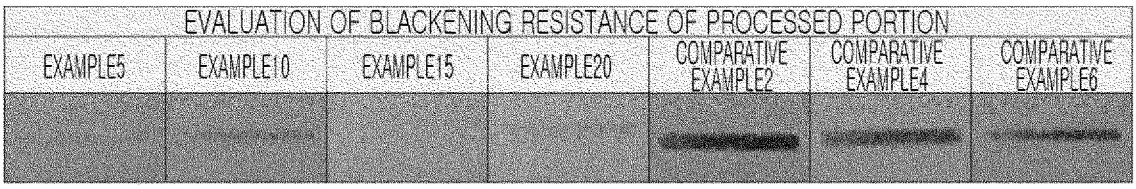

FIG. 5

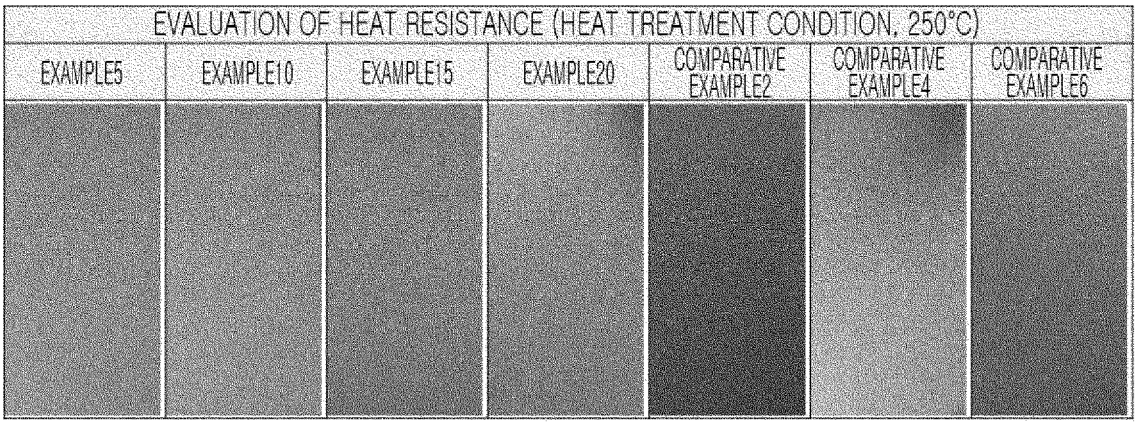
EVALUATION OF HEAT RESISTANCE (HEAT TREATMENT CONDITION, 250°C)
EXAMPLE5
EXAMPLE10
EXAMPLE15
EXAMPLE20
COMPARATIVE EXAMPLE2
COMPARATIVE EXAMPLE4
COMPARATIVE EXAMPLE6

FIG. 6

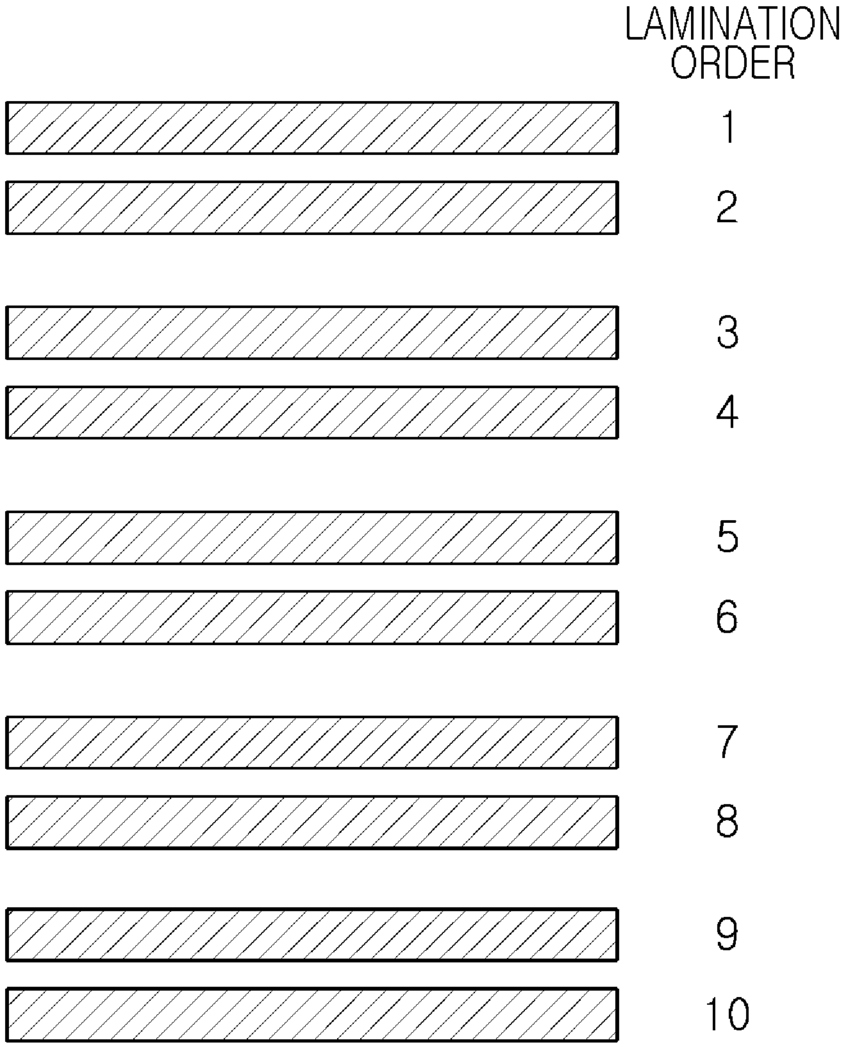

FIG. 7

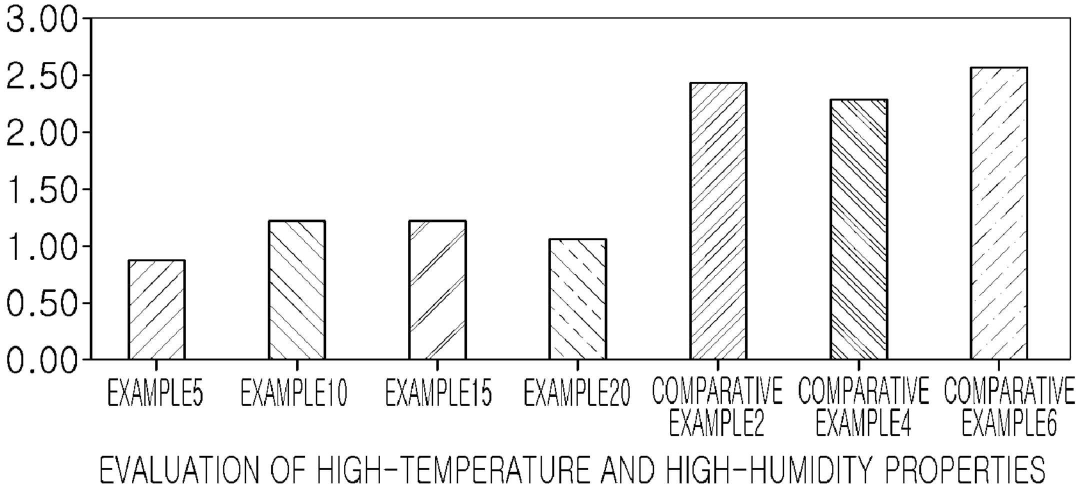
3.00
2.50
2.00
1.50
1.00
0.50
0.00
EXAMPLE5
EXAMPLE10
EXAMPLE15
EXAMPLE20
COMPARATIVE EXAMPLE2
COMPARATIVE EXAMPLE4
COMPARATIVE EXAMPLE6
EVALUATION OF HIGH-TEMPERATURE AND HIGH-HUMIDITY PROPERTIES

FIG. 8

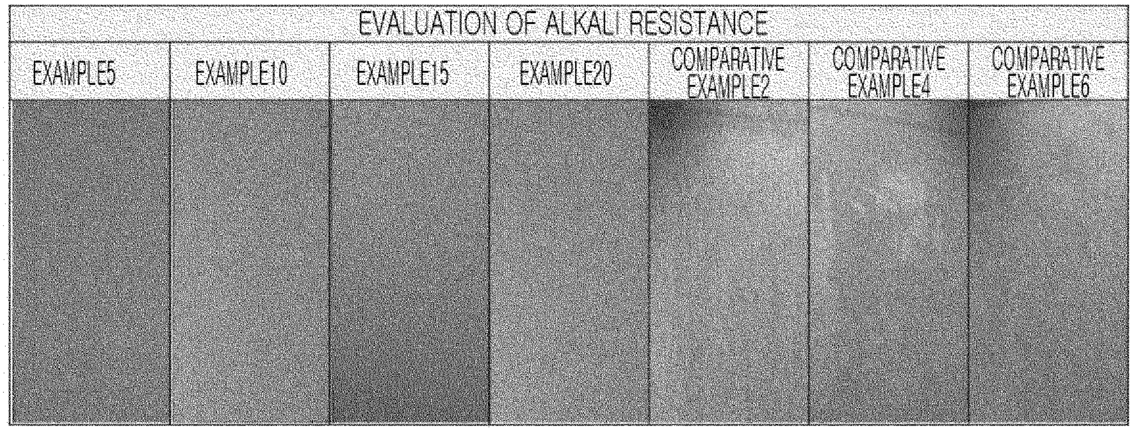
EVALUATION OF ALKALI RESISTANCE
EXAMPLE5
EXAMPLE10
EXAMPLE15
EXAMPLE20
COMPARATIVE EXAMPLE2
COMPARATIVE EXAMPLE4
COMPARATIVE EXAMPLE6

**INTERNATIONAL SEARCH REPORT**

International application No.
PCT/KR2019/015177

A. CLASSIFICATION OF SUBJECT MATTER
*C09D 7/63(2018.01)i, C09D 7/40(2018.01)i, C09D 175/04(2006.01)i, C09D 167/00(2006.01)i, C09D 163/00(2006.01)i, C09D 7/61(2018.01)i, B05D 7/14(2006.01)i, B05D 7/24(2006.01)i*
According to International Patent Classification (IPC) or to both national classification and IPC

B. FIELDS SEARCHED

Minimum documentation searched (classification system followed by classification symbols)
C09D 7/63; B05D 5/12; B32B 15/08; C08L 101/12; C09D 1/00; C09D 1/02; C09D 11/03; C09D 11/102; C09D 201/00; C09D 5/00; C09D 7/12; C09D 7/40; C09D 175/04; C09D 167/00; C09D 163/00; C09D 7/61; B05D 7/14; B05D 7/24

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal), Google & Keywords: resin, silane, curing agent, ferrocene

C. DOCUMENTS CONSIDERED TO BE RELEVANT

| Category* | Citation of document, with indication, where appropriate, of the relevant passages | Relevant to claim No. |
|---|---|---|
| Y | KR 10-2013-0039336 A (NIPPON STEEL & SUMITOMO METAL CORPORATION) 19 April 2013<br>See paragraphs [0056], [0057], [0067], [0129], [0130], [0136], [0143], [0161]-[0163]. | 1-9 |
| Y | CN 104312272 A (HEFEI HONGTU COLOR PRINTING CO., LTD.) 28 January 2015<br>See claim 1; paragraph [0012]. | 1-9 |
| Y | KR 10-2013-0069221 A (UNION STEEL MANUFACTURING CO., LTD. et al.) 26 June 2013<br>See claim 1. | 1-9 |
| Y | KR 10-2012-0074865 A (POSCO) 06 July 2012<br>See claim 1. | 1-9 |
| Y | KR 10-1081431 B1 (NGETECH CO., LTD.) 09 November 2011<br>See claim 1. | 1-9 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 FEBRUARY 2020 (14.02.2020) | **14 FEBRUARY 2020 (14.02.2020)** |

Name and mailing address of the ISA/KR
Korean Intellectual Property Office
Government Complex Daejeon Building 4, 189, Cheongsa-ro, Seo-gu, Daejeon, 35208, Republic of Korea
Facsimile No. +82-42-481-8578

Authorized officer

Telephone No.

Form PCT/ISA/210 (second sheet) (January 2015)

**INTERNATIONAL SEARCH REPORT**
Information on patent family members

International application No.
**PCT/KR2019/015177**

| Patent document cited in search report | Publication date | Patent family member | Publication date |
|---|---|---|---|
| KR 10-2013-0039336 A | 19/04/2013 | CA 2809940 A1 | 08/03/2012 |
| | | CA 2809940 C | 08/07/2014 |
| | | CN 103180136 A | 26/06/2013 |
| | | CN 103180136 B | 16/07/2014 |
| | | EP 2612753 A1 | 10/07/2013 |
| | | EP 2612753 B1 | 18/05/2016 |
| | | JP 5021107 B2 | 05/09/2012 |
| | | KR 10-1334553 B1 | 28/11/2013 |
| | | MY 159292 A | 30/12/2016 |
| | | RU 2524937 C1 | 10/08/2014 |
| | | TW 201221594 A | 01/06/2012 |
| | | TW I452094 B | 11/09/2014 |
| | | US 2013-0161062 A1 | 27/06/2013 |
| | | US 9127367 B2 | 08/09/2015 |
| | | WO 2012-029988 A1 | 08/03/2012 |
| CN 104312272 A | 28/01/2015 | None | |
| KR 10-2013-0069221 A | 26/06/2013 | KR 10-1410058 B1 | 23/06/2014 |
| KR 10-2012-0074865 A | 06/07/2012 | KR 10-1223817 B1 | 17/01/2013 |
| KR 10-1081431 B1 | 09/11/2011 | None | |

Form PCT/ISA/210 (patent family annex) (January 2015)